# FASCICULE DE BREVET EUROPEEN

(11) **EP 0 481 883 B1**
(45) Date de publication et mention de la délivrance du brevet: **27.12.1995**
(21) Numéro de dépôt: 91402759.4
(22) Date de dépôt: 15.10.1991
(51) Int. Cl.: A01B 3/46

(54) **Perfectionnement au dispositif d'articulation aménagé sur le bâti d'une charrue de grande longueur**
Verbesserung an der Gelenkeinrichtung eines langen Vielscharpfluges
Improvement of the articulation of a large width plough

(30) Priorité: 17.10.1990 FR 9013018
(43) Date de publication de la demande: 22.04.1992
(73) Titulaire: CHARRUES NAUD S.A., 49600 Andreze (FR)
(72) Inventeur: Naud, Bernard, F-49600 Andreze (FR); Naud, Pierre, F-49600 Andreze (FR)
(74) Mandataire: Phélip, Bruno

(56) Documents cités:
- DE-U- 7 202 127
- FR-A- 2 135 243
- FR-A- 2 201 022
- FR-A- 2 623 687

## Description

La présente invention concerne un perfectionnement au dispositif d'articulation aménagé sur le bâti d'une charrue de grande longueur.

Le bâti des charrues de grande longueur doit être renforcé pour résister aux sollicitations parfois importantes auxquelles il est soumis. Cependant, ce renfort limite ou supprime son élasticité naturelle qui lui permet de suivre les ondes du terrain et ainsi de conserver un terrage sensiblement constant.

Ce problème se pose autant pour les charrues simples que pour les charrues réversibles.

Les documents DE-U-7 202 127 et FR-A-2 201 022 proposent d'améliorer l'efficacité de charrues simples de grande longueur, comportant un grand nombre de socs, en scindant le bâti en deux tronçons, séparés par un dispositif d'articulation. Or la présence d'un tel dispositif d'articulation, en forme d'axe libre, entraîne des difficultés de pénétration des socs disposés sur le tronçon arrière et il est nécessaire de prévoir des moyens complémentaires de poussée sur ledit tronçon arrière.

Dans le document FR-A-2 623 687 qui montre les caractéristiques du préambule de la revendication 1, on a proposé un système permettant de conserver une certaine rigidité au bâti, tout en recréant une élasticité artificielle favorisant la régularité du terrage.

La charrue de type réversible décrite dans ce document FR-A-2 623 687 comporte un bâti constitué de deux tronçons : d'une part, un tronçon avant disposé entre le système d'attelage de la charrue sur le tracteur et un chariot support et, d'autre part, un tronçon arrière disposé au-delà dudit chariot support ; le tronçon arrière est soutenu et porté par le tronçon avant au moyen d'un dispositif d'articulation qui offre, en position normale de travail, un degré de liberté dans un plan vertical, audit tronçon arrière, par rapport audit tronçon avant, de façon à conserver un terrage sensiblement constant de l'ensemble des socs, quelles que soient les ondes du terrain.

Selon ce document, le dispositif d'articulation comprend un axe qui est perpendiculaire au sens d'avancement de la charrue, lorsqu'elle est en position normale de travail ; cet axe d'articulation est disposé à l'intersection des plans médians du tronçon avant et du tronçon arrière.

Le mouvement du tronçon arrière par rapport au tronçon avant, est limité au moyen d'organes élastiques en forme de plots, comprimés entre deux platines solidaires de l'un et l'autre tronçon. Les plots élastiques sont, après montage, précontraints au moyen d'un dispositif de réglage, de façon à maintenir les tronçons avant et arrière alignés et à conserver une possibilité de mouvement d'amplitude limitée, pour les tronçons, l'un par rapport à l'autre, en fonction du terrain. A noter que ce mouvement résulte directement des réactions des socs par rapport au sol ; le dispositif s'apparente à un organe de liaison souple constitué d'une articulation soumise à des moyens de rappel élastiques. La précontrainte des plots élastiques entraîne des efforts sur l'axe d'articulation qui peuvent être importants.

La présente invention propose un dispositif d'articulation qui comprend un axe et un système de rappel élastique interposé entre les tronçons avant et arrière. Ce système de rappel élastique présente la particularité de permettre une précontrainte ou mise en charge du ou des organes élastiques, sans engendrer d'efforts complémentaires sur l'axe d'articulation.

La charrue selon l'invention comporte au moins un organe élastique qui est précontraint par des moyens disposés en ligne, de part et d'autre dudit organe élastique, et solidaires de l'un des tronçons. Cet organe élastique est par ailleurs compressible selon une direction sensiblement identique à la direction de la précontrainte, par des moyens appropriés disposés sur l'autre tronçon. Les moyens de précontrainte sont disposés sur l'un ou l'autre des tronçons, avant ou arrière, selon les possibilités constructives liées à l'encombrement. Pour simplifier, dans la suite du texte, les moyens de précontrainte seront solidaires du tronçon porteur, c'est-à-dire le tronçon avant, et les moyens en contact avec le ou les organes élastiques, seront disposés sur le tronçon porté c'est-à-dire le tronçon arrière de la charrue.

La charrue selon l'invention, comporte, sur le tronçon porté, des moyens qui agissent sur au moins un organe élastique, de façon à le comprimer, soit dans une direction sensiblement parallèle au plan médian du tronçon porteur, soit dans une direction sensiblement perpendiculaire à cedit plan médian du tronçon porteur.

Selon une possibilité de l'invention, la charrue comporte, sur le tronçon porté, des moyens d'action sur les organes élastiques, constitués d'au moins une patte en forme de platine, disposée entre deux organes élastiques qui sont précontraints par des moyens solidaires de l'autre tronçon. Lesquels organes élastiques sont en forme de cylindres enfilés sur une tige filetée qui traverse ladite platine. Cette tige est solidaire, à l'une de ses extrémités, du tronçon porteur et elle comporte, d'une part, des moyens de positionnement des deux organes élastiques, par rapport à ladite platine, constitués d'une butée centrale vissée se situant sensiblement au centre de ladite platine et, d'autre part, des moyens de précontrainte en forme de butées vissées également, disposées aux extrémités des organes élastiques.

Selon une autre possibilité de l'invention, la charrue comporte deux organes élastiques positionnés de part et d'autre d'une platine aménagée dans le prolongement du tronçon porteur, au-delà de ce dernier, par rapport à l'axe d'articulation, du côté du tronçon porté. Lesdits organes élastiques sont comprimés entre ladite platine et le tronçon porté, par l'intermédiaire de vis de précontrainte solidaires dudit tronçon porté.

Selon une autre possiblité de l'invention, la charrue comporte, sur le tronçon porté, des moyens agissant sur au moins un organe élastique, constitués d'au moins deux pattes en forme de platines disposées de part et d'autre d'un organe élastique qui est précontraint par des moyens solidaires du tronçon porteur. Cet organe élastique est, dans un cas, enfilé sur une tige filetée qui traverse lesdites platines et qui est munie de moyens de positionnement de l'organe élastique, en forme de butées vissées à ses extrémités ; dans un autre cas il est précontraint entre deux butées situées dans le prolongement du tronçon porteur, au-delà de l'axe d'articulation, et comprimé par le tronçon porté au moyen de pattes en forme de doigts qui s'appliquent au centre de ses faces d'extrémité.

L'invention sera encore illustrée à l'aide de la description suivante et des dessins annexés, donnés à titre indicatif et dans lesquels :
- la figure 1 représente un mode de réalisation du dispositif d'articulation ;
- la figure 2 représente, de façon plus détaillée, le positionnement des organes élastiques avec les moyens de précontrainte ;
- la figure 3 représente un autre mode de réalisation de l'invention ;
- les figures 4, 5 et 6 représentent, sous la forme de schémas fonctionnels, d'autres modes de réalisation du dispositif d'articulation selon l'invention.

On a représenté, sur les différentes figures, plusieurs possibilités d'aménagement du dispositif d'articulation entre le tronçon avant 1 et le tronçon arrière 2 de la charrue, représentés partiellement. Le tronçon avant 1 est le tronçon porteur ; le tronçon arrière 2 est le tronçon porté. Ce dispositif d'articulation fait partie d'une charrue de grande longueur du type par exemple de celle représentée dans le document FR-A-2 623 687.

Le tronçon avant 1 du bâti de la charrue, est relié au tronçon arrière 2 par l'intermédiaire d'un axe d'articulation 3. Cet axe d'articulation 3 se situe à l'intersection des plans médians du tronçon avant 1 et du tronçon arrière 2. Ces deux tronçons 1 et 2 sont maintenus alignés l'un par rapport à l'autre, au moyen d'organes élastiques 4 en forme de plots réalisés par exemple en matériau du genre élastomère ou caoutchouc. Ces plots sont de préférence précontraints, c'est-à-dire qu'ils sont écrasés de quelques dixièmes de mm voire quelques mm.

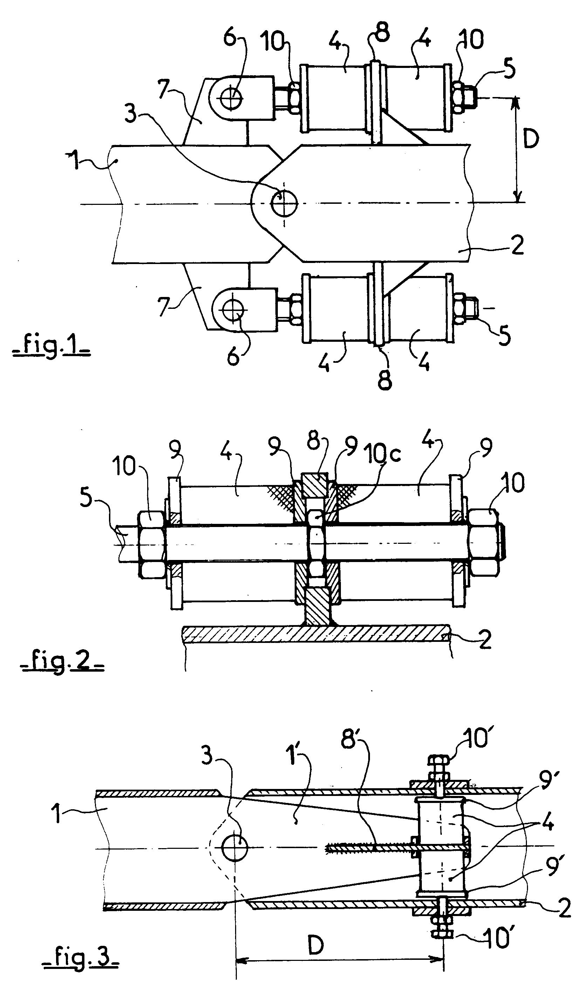

On a représenté, figure 1 et figure 2, un premier mode de réalisation du dispositif d'articulation. Les organes élastiques 4 sont disposés sur une tige rectiligne 5 qui est articulée, à l'une de ses extrémités, au moyen d'un axe 6, sur un bras 7 solidaire du tronçon porteur 1. Cette tige 5 se situe dans un plan parallèle au plan médian du tronçon 1 ; elle est perpendiculaire à l'axe d'articulation 3. Les organes élastiques 4 sont répartis sur la tige 5, de part et d'autre d'une patte 8 en forme de platine qui est solidaire du tronçon porté 2. Cette platine 8 est traversée par la tige 5 ; elle est perpendiculaire au plan médian du tronçon 2, passant par l'axe 3, et elle se situe à proximité dudit axe d'articulation 3.

On remarque que des organes élastiques 4 sont disposés symétriquement de part et d'autre des tronçons 1 et 2. On peut aussi prévoir de disposer côte à côte, d'un même côté des tronçons 1 et 2, par rapport aux plans médians, plusieurs tiges 5 munies d'organes élastiques 4, coopérant avec d'autres platines 8 reliées entre elles ou monobloc.

La tige 5 est éloignée du plan médian des tronçons 1 et 2 passant par l'axe d'articulation 3, d'une distance D qui est de l'ordre de 20 à 30 cm, figure 1.

La figure 2 détaille le montage des plots élastiques 4 et de la platine 8, par rapport à la tige 5. Cette tige 5 se présente sous la forme d'une tige filetée. Elle reçoit deux organes élastiques 4 de forme cylindrique munis d'un orifice central. Ces plots 4 sont enserrés entre des rondelles métalliques 9 qui prennent appui sur des butées 10. Ces butées 10 sont constituées d'écrous vissés sur la tige 5. Une butée centrale 10c est positionnée entre les deux organes élastiques 4. Elle sert à positionner les organes élastiques sur la tige 5 de façon à régler la position de la platine 8 solidaire du tronçon porté. Les autres butées 10 situées de chaque côté des plots 4 servent à administrer une précontrainte à chacun des plots 4, en fonction des besoins.

La platine 8 est positionnée entre les rondelles 9 ; elle assure le centrage de ces rondelles et elle se situe au niveau de la butée centrale 10c, autour et sans contact avec cette dernière.

On remarque que les efforts de précontrainte appliqués aux organes élastiques 4 sont dirigés sur une même ligne qui correspond à l'axe de la tige 5.

Le mouvement du tronçon 2 par rapport au tronçon 1 provoque, par l'intermédiaire de la platine 8, une compression de l'un ou de l'autre des organes élastiques 4 ; cette compression s'effectue entre ladite platine 8 et l'une des butées 10.

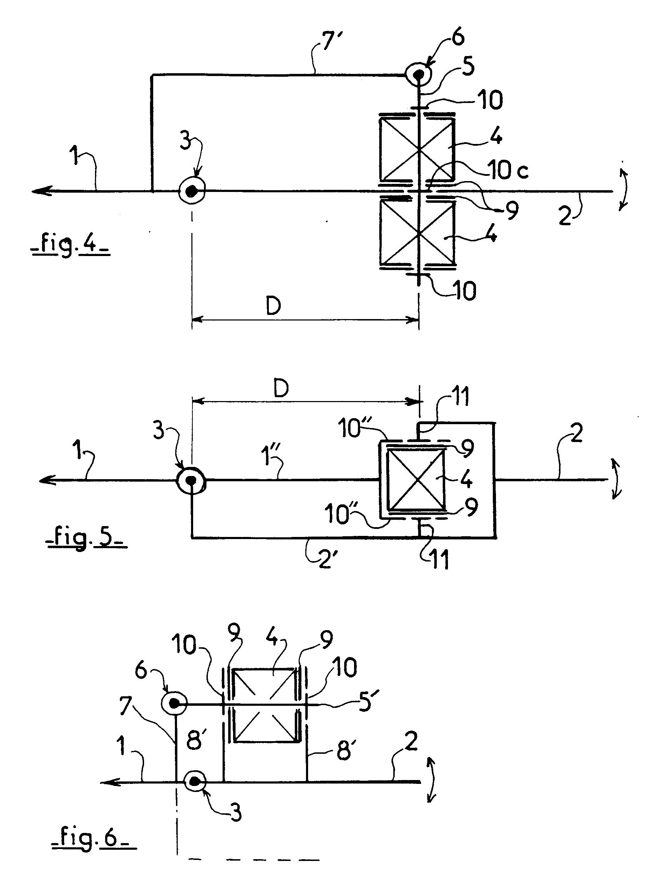

On a représenté, figure 3, un autre mode de réalisation de l'invention, dans lequel les organes élastiques 4 sont comprimés selon une direction qui est perpendiculaire au plan médian des tronçons avant 1 et arrière 2. Le tronçon avant 1 s'étend au-delà de l'axe d'articulation 3 sous la forme d'un bras 1′ logé par exemple à l'intérieur du tronçon 2. Ce bras 1′ comporte une platine 8′ disposée dans le plan médian du tronçon avant 1. Cette platine reçoit, de chaque côté, un organe élastique 4 maintenu par tout moyen approprié grâce par exemple à un logement.

Les organes élastiques 4 sont introduits dans le tronçon 2 en même temps que le bras 1 ; ils sont ensuite précontraints au moyen de butées réglables 10′ en forme de vis, logées dans le tronçon 2. Ces butées réglables 10′ sont en contact avec des plaques de compression 9′ disposées aux extrémités des organes élastiques 4.

Là encore, les efforts de précontrainte des organes élastiques 4 sont dirigés selon une même ligne. Cette ligne se situe à une distance D de l'axe 3 qui peut être supérieure à la distance D qui existe figure 1 entre la tige 5 et le même axe 3.

On a représenté, sur les figures 4, 5 et 6, d'autres modes de réalisation du dispositif d'articulation disposé entre le tronçon avant 1 et le tronçon arrière 2. Les mêmes repères ont été conservés pour désigner les mêmes composants.

Ainsi, figure 4, le dispositif d'articulation entre le tronçon avant 1 et le tronçon arrière 2 comporte deux organes élastiques 4 disposés sur une tige 5 sui s'étend perpendiculairement au plan médian du tronçon avant 1. La tige 5 est solidaire, à l'une de ses extrémités, de l'articulation 6 disposée à l'extrémité d'un bras 7′ solidaire du tronçon avant 1. Ce bras 7′ s'étend au-delà de l'axe d'articulation 3, du côté du tronçon arrière 2, de façon à placer la tige 5 à une distance D dudit axe 3 ; laquelle distance est de l'ordre de 50 cm à un mètre, selon le nombre de corps de labour du tronçon arrière. Le tronçon arrière 2, par exemple, est traversé par la tige 5 et les organes élastiques 4 sont disposés de part et d'autre de ce tronçon 2. Ces organes élastiques 4 sont précontraints, sur la tige 5, au moyen des butées 10 vissées sur cette dernière. La butée centrale 10c permet de régler l'alignement entre les tronçons avant 1 et arrière 2 ; elle se situe dans un orifice du tronçon 2. Le mouvement du tronçon arrière 2 par rapport au tronçon avant 1, provoque une compression de l'un ou l'autre des organes élastiques 4, par déplacement de l'une ou l'autre des plaques 9 qui sont, normalement, en contact avec la butée centrale 10c.

La figure 5 représente un autre mode de réalisation dans lequel l'organe élastique 4 est intégré dans une structure directement aménagée sur l'un des tronçons et en particulier sur un bras 1˝ qui s'étend, au-delà de l'axe d'articulation 3, du côté du tronçon arrière 2. Ce tronçon arrière 2 enveloppe la structure d'emprisonnement de l'organe élastique 4. Cet organe élastique 4 est logé entre deux butées 10˝ solidaires du bras 1˝ et disposées de part et d'autre du plan médian du tronçon avant 1. Le tronçon arrière 2 comporte des pattes en forme de doigts 11, centrées sur l'axe de l'organe élastique. Ces doigts 11 traversent les butées 10˝ et sont en contact, au centre, avec les rondelles 9 disposées de part et d'autre de l'organe élastique 4 et qui servent à le comprimer. Ces doigts 11 sont disposés symétriquement de part et d'autre du plan médian du tronçon arrière 2. Le mouvement de ce tronçon arrière 2 par rapport au tronçon avant 1, provoque une compression de l'organe élastique 4 par l'un ou l'autre des doigts 11, lequel organe élastique 4 est maintenu en appui sur l'une ou l'autre des butées 10˝.

Là encore on remarque que l'organe élastique 4 est précontraint dans une structure isolée solidaire du tronçon avant 1, par l'intermédiaire du bras 1˝. Cette précontrainte s'effectue selon une ligne perpendiculaire au plan médian du tronçon avant 1, éloignée de l'axe d'articulation 3 d'une distance D qui est fonction du nombre de corps porté par le tronçon arrière.

La structure renfermant l'organe élastique 4, c'est-à-dire les butées 10˝ solidaires du bras 1˝, est logée dans un décrochement 2′ aménagé sur le tronçon arrière 2, à l'arrière de l'axe d'articulation 3.

On a représenté figure 6, un autre mode de réalisation dans lequel le tronçon arrière 2 comporte deux platines 8′ qui enserrent un seul organe élastique 4 monté sur une tige 5′. Les platines 8′ sont centrées par rapport à la tige 5′ par leur contact avec les rondelles 9 qui sont situées aux extrémités de l'organe élastique 4. La position et en particulier l'alignement des tronçons 1 et 2 est réglée par la position de l'organe élastique 4 sur la tige 5′ au moyen des butées 10 en forme d'écrous vissés sur ladite tige, lesquelles butées se situent dans des orifices au centre des platines 8′, sans contact avec ces dernières.

La tige 5′ est solidaire du tronçon avant 1 au moyen d'un axe d'articulation 6 situé à l'une de ses extrémités, et d'un bras 7 qui déporte latéralement ledit axe 6 par rapport au tronçon 1.

La précontrainte de l'organe élastique 4 est assurée par les butées 10. L'épaisseur de l'organe élastique précontraint correspond sensiblement à l'espace entre les deux platines 8′.

Le mouvement du tronçon arrière 2 par rapport au tronçon avant 1, provoque une compression de l'organe élastique 4 par l'une ou l'autre des platines 8′. Là encore on peut disposer des organes élastiques de part et d'autre du plan médian des tronçons 1 et 2. Leur nombre sera fonction du nombre de socs disposés sur le tronçon arrière.

Les signes de référence insérés après les caractéristiques techniqsues mentionnées dans les revendications ont pour seul but de faciliter la compréhension de ces dernières et n'en limitent aucunement la portée.

## Revendications

1. Charrue semi-portée, de grande longueur, comportant un bâti longitudinal constitué de deux tronçons: d une part, un tronçon avant (1) porteur, disposé entre le système d'attelage et un chariot support et, d'autre part, un tronçon arrière (2) porté, disposé au-delà dudit chariot, laquelle charrue comporte également sur le bâti, un dispositif d'articulation positionné entre le tronçon avant porteur et le tronçon arrière porté, lequel dispositif d'articulation est constitué d'un axe (3) perpendiculaire au sens d'avancement de la charrue, situé à l'intersection des plans médians desdits tronçons avant (1) et arrière (2), lequel dispositif d'articulation comporte un système de rappel élastique interposé entre lesdits tronçons avant et arrière, tendant à les maintenir alignés de façon élastique, caractérisée en ce qu'elle comporte au moins un organe élastique (4) qui est précontraint par des moyens qui sont disposés en ligne de part et d'autre dudit organe (4) et qui sont solidaires de l'un des tronçons ( 1 ou 2) de façon à ne pas engendrer d'efforts complémentaires sur ledit axe (3), lequel organe élastique (4) est par ailleurs compressible, selon une direction sensiblement identique à la direction de la précontrainte, par des moyens appropriés disposés sur l'autre tronçon ( 2 ou 1), en coopération avec lesdits moyens de précontrainte.

2. Charrue selon la revendication 1, caractérisée en ce qu'elle comporte, sur le tronçon (2), des moyens qui agissent sur au moins un organe élastique (4), de façon à le comprimer dans une direction sensiblement parallèle au plan médian du tronçon (1).

3. Charrue selon la revendication 1, caractérisée en ce qu'elle comporte, sur le tronçon (2), des moyens agissant sur au moins un organe élastique (4) de façon à le comprimer dans une direction sensiblement perpendiculaire au plan médian du tronçon (1).

4. Charrue selon l'une quelconque des revendications 2 ou 3, caractérisée en ce qu'elle comporte sur le tronçon (2), des moyens d'action sur les organes élastiques (4), constitués d'au moins une patte en forme de platine (8) disposée entre deux organes élastiques (4) qui sont précontraints par des moyens solidaires du tronçon (1).

5. Charrue selon la revendication 4, caractérisée en ce qu'elle comporte deux organes élastiques (4) en forme de cylindres enfilés sur une tige filetée (5) qui traverse la platine (8), laquelle tige (5) est solidaire, à l'une de ses extrémités, du tronçon (1) et, comporte d'une part, des moyens de positionnement des deux organes élastiques (4), constitués d'une butée centrale (10c) vissée sur ladite tige (5), et, d'autre part, des moyens de précontrainte en forme de butées (10) vissées également sur ladite tige (5), disposées aux extrémités des organes élastiques (4), ladite butée centrale (10c) se situant sensiblement au centre de la platine (8) solidaire du tronçon (2).

6. Charrue selon la revendication 4, caractérisée en ce qu'elle comporte deux organes élastiques positionnés de part et d'autre d'une platine (8′) située dans le plan médian du tronçon (1) et solidaire d'un bras (1′) aménagé dans le prolongement dudit tronçon (1), au-delà de ce dernier par rapport à l'axe d'articulation (3), du côté du tronçon (2), lesdits organes élastiques (4) sont précontraints entre ladite platine (8′) et le tronçon (2), par l'intermédiaire de butées (10′) en forme de vis réglables, solidaires dudit tronçon (2).

7. Charrue selon l'une quelconque des revendications 2 ou 3, caractérisée en ce qu'elle comporte, sur le tronçon (2), des moyens agissant sur au moins un organe élastique (4), constitués d'au moins deux pattes en forme de platines (8′) disposées de part et d'autre d'un organe élastique (4) qui est précontraint par des moyens solidaires du tronçon (1).

8. Charrue selon la revendication 7, caractérisée en ce qu'elle comporte au moins un organe élastique (4) en forme de cylindre enfilé sur une tige filetée (5′) qui traverse les platines (8′) du tronçon (2), et dont l'une des extrémités est solidaire du tronçon (1), laquelle tige (5′) comporte des moyens de positionnement et de précontrainte de l'organe élastique, en forme de butées (10) vissées à ses extrémités, logées au centre desdites platines.

9. Charrue selon la revendication 7, caractérisée en ce qu'elle comporte un organe élastique (4) précontraint entre deux butées (10˝) solidaires du tronçon (1), et comprimé par le tronçon (2) au moyen de pattes en forme de doigts (11) qui s'appliquent au centre des faces d'extrémité dudit organe élastique (4).

10. Charrue selon la revendication 9, caractérisée en ce qu'elle comporte des moyens de précontrainte en forme de butées (10˝), situées sur un bras (1˝), dans le prolongement du tronçon (1), au-delà de l'axe d'articulation (3), dans un décrochement (2′) aménagé à l'extrémité du tronçon (2).

## Claims

1. A semi-supported large width plough, comprising a longitudinal frame made of two sections : on the one hand, a front bearing section (1), arranged between the coupling system and a supporting truck and, on the other hand, a rear supported section (2), located beyond the said frame, whereby the said plough also contains on the frame, an articulation device arranged between the front bearing section and the rear supported section, the said articulation device comprising an axle (3) perpendicular to the direction of forward motion of the plough, situated at the intersection of the median planes of the said front (1) and rear (2) sections, whereby the said articulation device exhibits an elastic recall system interposed between the said front and rear sections, tending to maintain them in alignment, flexibly, characterised in that the plough contains at least one elastic device (4) which is pre-stressed by means aligned on either side of the said device (4) and which are connected rigidly to one of the sections (1 or 2) so as not to generate any additional stresses onto the said axle (3), whereas the said elastic device (4) is also compressible, according to a direction more or less identical to the direction of the pre-stress, by appropriate means arranged on the other section (2 or 1), in co-operation with the said pre-stressing means.

2. A plough according to the claim 1, characterised in that it contains, on the section (2), means acting on at least one elastic device (4), in order to compress it into a direction more or less parallel to the median plane of the section (1).

3. A plough according to the claim 1, characterised in that it contains, on the section (2), means acting on at least one elastic device (4), in order to compress it into a direction more or less perpendicular to the median plane of the section (1).

4. A plough according to any of the claims 2 or 3, characterised in that it contains on the section (2) means acting on the elastic devices (4), made of at least one plate-shaped tab (8) arranged between two elastic devices (4) which are pre-stressed by means connected rigidly to the section (1).

5. A plough according to the claim 4, characterised in that it contains two elastic devices (4) in the shape of cylinders attached on a threaded rod (5) which goes through the plate (8), the said rod (5) being connected rigidly, at one of its ends, to the section (1) and comprising on the one hand, positioning means of the two elastic devices (4), made of a centre stop (10c) screwed on the said rod (5), and on the other hand, prestressing means in the shape of stops (10) also screwed on the said rod (5), arranged at the ends of the elastic devices (4), whereby the said centre stop (10c) is located more or less in the centre of the plate (8) connected rigidly to the section (2).

6. A plough according to the claim 4, characterised in that it contains two elastic devices positioned on either side of a plate (8') located on the medial plane of the section (1) and connected rigidly to an arm (1') arranged in the alignment of the said section (1), beyond the former with respect to the axis of articulation (3), on the side of the section (2), whereby the said elastic devices (4) are pre-stressed between the said plate (8') and the section (2), using stops (10') in the shape of adjustable screws, connected rigidly to the said section (2).

7. A plough according to any of the claims 2 or 3, characterised in that it contains, on the section (2), means acting on at least one elastic device (4), made of at least two plate-shaped tabs (8') arranged on either side of an elastic device (4) which is pre-stressed by means connected rigidly to the section (1).

8. A plough according to the claim 7, characterised in that it contains at least one elastic device (4) in the shape of a cylinder attached on a threaded rod (5') which goes through the plates (8') of the section (2), whereby one of its ends is connected rigidly to the section (1), the said rod (5') comprising positioning and pre-stressing means of the elastic device, in the shape of stops (10) screwed at its ends, located in the centre of the said plates.

9. A plough according to claim 7, characterised in that it comprises an elastic device (4) pre-stressed between two stops (10'') connected rigidly to the section (1) and compressed by the section (2) using finger-shaped tabs (11) applied in the centre of the end surfaces of the said elastic device (4).

10. A plough according to the claim 9, characterised in that it contains pre-stressing means in the shape of stops (10''), located on an arm (1''), in the alignment of the section (1), beyond the axis of articulation (3), in a flexure (2') arranged at the end of the section (2).

## Patentansprüche

1. Langer Aufsattelpflug mit einem länglichen Rahmen, dieser bestehend aus- zwei Abschnitten, nämlich zum einen aus einem vorderen Trägerabschnitt (1), der zwischen dem Kupplungssystem und einem Trägerwagen vorgesehen ist, und zum anderen aus einem hinteren, getragenen Abschnitt (2), der über den genannten Wagen hinaus angeordnet ist, wobei der Pflug ebenfalls an dem Rahmen eine zwischen dem vorderen Trägerabschnitt und dem hinteren, getragenen Abschnitt vorgesehene Gelenkeinrichtung umfaßt, wobei die Gelenkeinrichtung aus einer senkrecht zur Fahrtrichtung des Pfluges stehenden Achse (3) gebildet ist, die in der Schnittstelle der mittleren Ebenen der genannten vorderen (1) und hinteren (2) Abschnitte vorgesehen ist, und die Gelenkeinrichtung ein zwischen dem genannten vorderen und hinteren Abschnitt angeordnetes, elastisches Rückstellsystem umfaßt, das dazu neigt, diese federnd auszurichten, dadurch gekennzeichnet, daß er mindestens ein elastisches Element (4) umfaßt, das mit Mitteln vorgespannt ist, die in einer Linie zu beiden Seiten des genannten Elementes (4) angeordnet sind und die mit einem der Abschnitte (1 oder 2) fest verbunden sind, derart, daß sie keine zusätzlichen Kräfte auf die genannte Achse (3) ausüben, und daß das elastische Element (4) darüber hinaus durch geeignete Mittel, die auf dem anderen Abschnitt (2 oder 1) angeordnet sind, in Zusammenwirkung mit den genannten Vorspannmitteln in einer im wesentlichen der Richtung der Vorspannung entsprechenden Richtung komprimierbar ist.

2. Pflug nach Anspruch 1, dadurch gekennzeichnet, daß er auf dem Abschnitt (2) Einrichtungen aufweist, die auf mindestens ein elastisches Element (4) einwirken, derart, daß es in einer im wesentlichen parallel zur mittleren Ebene des Abschnitts (1) verlaufenden Richtung komprimiert wird.

3. Pflug nach Anspruch 1, dadurch gekennzeichnet, daß er auf dem Abschnitt (2) Einrichtungen aufweist, die auf mindestens ein elastisches Element (4) einwirken, derart, daß es in einer im wesentlichen senkrecht zur mittleren Ebene des Abschnitts (1) verlaufenden Richtung komprimiert wird.

4. Pflug nach einem der Ansprüche 2 oder 3, dadurch gekennzeichnet, daß er auf dem Abschnitt (2) auf die elastischen Elemente (4) einwirkende Betätigungsmittel aufweist, die mindestens aus einer platinenförmig ausgebildeten Klaue (8) bestehen, die zwischen zwei elastischen Elementen (4) angeordnet ist, die durch mit dem Abschnitt (1) verbundene Mittel vorgespannt sind.

5. Pflug nach Anspruch 4, dadurch gekennzeichnet, daß er zwei zylinderförmig ausgebildete, elastische Elemente (4) aufweist, die auf einer Gewindestange (5) aufgesteckt sind, die die Platine (8) durchquert, daß die Stange (5) an einem ihrer Enden mit dem Abschnitt (1) verbunden ist und einerseits Mittel zum Einstellen der beiden elastischen Elemente (4), die aus einem auf die genannte Stange (5) geschraubten mittleren Anschlag (10c) und andererseits aus ebenfalls auf der genannten Stange (5) aufgeschraubten, anschlagförmig ausgebildeten Vorspannmitteln (10) bestehen, die an den Enden der elastischen Elemente (4) angeordnet sind, und daß der genannte mittlere Anschlag (10c) im wesentlichen in der Mitte der mit dem Abschnitt (2) fest verbundenen Platine (8) vorgesehen ist.

6. Pflug nach Anspruch 4, dadurch gekennzeichnet, daß er zwei elastische Elemente aufweist, die zu beiden Seiten einer Platine (8') angeordnet sind, die sich in der mittleren Ebene des Abschnitts (1) befindet und mit einem Arm (1') fest verbunden ist, der in Bezug auf die Gelenkachse (3) in der Verlängerung des genannten Abschnitts (1) über diesen hinaus neben dem Abschnitt (2) angeordnet ist, und daß die genannten elastischen Elemente (4) zwischen der genannten Platine (8') und dem Abschnitt (2) mit Hilfe von Anschlägen (10') in Form verstellbarer Schrauben vorgespannt sind, die mit dem genannten Abschnitt (2) fest verbunden sind.

7. Pflug nach einem der Ansprüche 2 oder 3, dadurch gekennzeichnet, daß er auf dem Abschnitt (2) auf mindestens ein elastisches Element (4) einwirkende Mittel aufweist, die aus mindestens zwei in Form von Platinen (8') ausgebildeten Klauen gebildet sind, die zu beiden Seiten eines elastischen Elementes (4) angeordnet sind, das durch mit dem Abschnitt (1) fest verbundene Mittel vorgespannt ist.

8. Pflug nach Anspruch 7, dadurch gekennzeichnet, daß er mindestens ein elastisches Element (4) in Form eines auf einer Gewindestange (5') aufgeschraubten Zylinders aufweist, der die Platinen (8') des Abschnitts (2) durchquert und dessen eines von zwei Enden mit dem Abschnitt (1) fest verbunden ist, und daß die Stange (5') Mittel zum Einstellen und Vorspannen des elastischen Elementes aufweist, die in Form von an ihren Enden angeschraubten Anschlägen (10) ausgebildet sind, die in der Mitte der genannten Platinen angeordnet sind.

9. Pflug nach Anspruch 7, dadurch gekennzeichnet, daß er ein elastisches Element (4) aufweist, das zwischen zwei mit dem Abschnitt (1) fest verbundenen Anschlägen (10'') vorgespannt ist und durch den Abschnitt (2) mittels fingerförmig ausgebildeter Platten (11) komprimiert wird, die in der Mitte der Endflächen des genannten elastischen Elementes (4) angreifen.

10. Pflug nach Anspruch 9, dadurch gekennzeichnet, daß er Vorspannmittel in Form von Anschlägen (10'') aufweist, die sich auf einem Arm (1'') in der Verlängerung des Abschnitts (1) über die Gelenkachse (3) hinaus an einem am Ende des Abschnitts (2) vorgesehenen Seitenteiles (2') befinden.
